# FASCICULE DE BREVET EUROPEEN

(11) **EP 2 225 016 B1**
(45) Date de publication et mention de la délivrance du brevet: **06.11.2013**
(21) Numéro de dépôt: 08872278.0
(22) Date de dépôt: 01.12.2008
(51) Int. Cl.: B01J 8/04, C10G 35/04, B01J 8/12, C07C 5/32, B01J 19/24

(54) **PERFECTIONNEMENT DU RÉACTEUR ET DU PROCÉDÉ POUR LES RÉACTIONS ENDOTHERMIQUES EN PHASE GAZEUSE**
VERBESSERUNG AN EINEM REAKTOR UND EINEM VERFAHREN FÜR ENDOTHERMALE GASPHASENREAKTIONEN
IMPROVEMENT TO A REACTOR AND TO A METHOD FOR GASEOUS PHASE ENDOTHERMAL REACTIONS

(30) Priorité: 06.12.2007 FR 0708561
(43) Date de publication de la demande: 08.09.2010
(73) Titulaire: IFP Energies nouvelles, 92852 Rueil-Malmaison Cedex (FR)
(72) Inventeur: FERSCHNEIDER, Gilles, F-69970 Chaponnay (FR); FISCHER, Béatrice, F-69005 Lyon (FR)
(86) Numéro de dépôt international: PCT/FR2008/001673
(87) Numéro de publication internationale: WO 2009/101278

(56) Documents cités:
- EP-A- 1 300 190
- EP-A- 1 854 535
- DE-A1- 10 031 347

## Description

### Domaine de l'invention :

L'invention concerne un réacteur et un procédé mettant en oeuvre ce réacteur pour les réactions endothermiques en phase gazeuse sur catalyseur solide. Ce réacteur s'adapte particulièrement aux réactions de reformage catalytique et aux réactions de déshydrogénation d'hydrocarbures.

La présente invention concerne un réacteur permettant de récupérer la chaleur du gaz de combustion sous pression et d'effectuer les réactions.

Le procédé utilise du gaz de combustion sous pression pour assurer la chauffe du réacteur par échange indirect de chaleur à l'intérieur du réacteur.

### Art antérieur :

Il est habituel de traiter les coupes d'essence lourde (80 - 180°C) comportant principalement les hydrocarbures entre C6 et C10 provenant de la distillation initiale du pétrole pour amener leur indice d'octane à une valeur élevée pour leur utilisation dans un moteur de voiture automobile. Le procédé de reformage catalytique permet d'effectuer cette opération. Ce procédé consiste à passer la coupe essence en présence d'hydrogène sur un catalyseur comportant des métaux précieux à une température élevée (voisine de 500°C). Les réactions de reformage catalytique consistent principalement à déshydrogéner les naphtènes et les paraffines présentes dans la charge pour les transformer en aromatiques qui ont un indice d'octane élevé, et à isomériser les paraffines restantes pour augmenter également l'indice d'octane de l'essence. Une première réaction indésirable est le craquage qui produit des hydrocarbures légers, tels que du méthane, de l'éthane, du propane et du butane et qui diminue le rendement de l'opération. Une seconde réaction indésirable est le cokage du catalyseur, qui diminue l'activité du catalyseur et oblige à sa régénération périodique par brûlage du coke pour rétablir son activité. Le craquage est d'autant plus important que la pression est élevée. Ainsi, les rendements sont meilleurs à faible pression. Cependant, le cokage est d'autant plus élevé que la pression partielle d'hydrogène est faible.

Les unités anciennes opéraient à forte pression (15 à 30 bars environ), avec un fort taux de recyclage d'hydrogène, avec des rendements médiocres, et permettaient d'opérer environ 11 mois avant qu'il ne soit nécessaire de régénérer le catalyseur.

Les unités à régénération continue du catalyseur permettent de régénérer la totalité du catalyseur en quelques jours, ce qui permet une opération à pression faible (3 à 5 bars environ), donc des rendements plus élevés. Le catalyseur circule continûment dans les réacteurs, qui sont alors de type radial, et est envoyé dans une section de régénération afin d'être régénéré, avant d'être ramené dans le premier réacteur. Les réactions de déshydrogénation sont très endothermiques, et les réactions s'arrêtent lorsque la température est trop faible. Les procédés actuels comportent généralement trois ou quatre réacteurs et autant de fours en série. Chaque four est suivi d'un réacteur. Du fait des températures élevées, les fours ont un faible rendement et il est habituel de produire de la vapeur pour améliorer le rendement global du four. Il est également habituel d'utiliser cette vapeur pour actionner une turbine entraînant le compresseur de recyclage et le compresseur d'exportation d'hydrogène. Ces dernières années, il est plus courant d'utiliser un moteur électrique à vitesse variable pour les compresseurs, et l'utilisation de vapeur est moindre dans les raffineries modernes, qui privilégient pour des raisons économiques l'utilisation de l'électricité. De ce fait, l'utilisation de fours de taille considérable générant de la vapeur avec les problèmes associés d'opération et de maintenance est de nos jours plutôt un inconvénient pour le procédé.

D'autres procédés de déshydrogénation d'hydrocarbures tel que la déshydrogénation des paraffines longues utilisent un procédé identique au reformage catalytique et sont concernés par la même problématique.

### Description sommaire de l'invention

L'invention concerne un réacteur permettant la mise en oeuvre d'une réaction endothermique en phase gazeuse présentant une forme cylindrique le long d'un axe vertical selon la revendication 1.

L'invention concerne aussi le procédé mettant en oeuvre le réacteur selon l'invention.

La présente invention utilise généralement pour le chauffage du réacteur, de préférence du réacteur de reformage, des gaz de combustion sous pression qui permettent également de produire de l'électricité pour l'unité de reformage catalytique, et éventuellement pour d'autres unités. Un seul réacteur est généralement utilisé, avec des internes spéciaux permettant l'alternance de sections de chauffe par échange avec le gaz de combustion et des sections catalytiques adiabatiques, le catalyseur pouvant circuler par gravité dans le réacteur. L'empreinte globale au sol de l'unité, le nombre d'équipement et le coût de la section réactionnelle sont ainsi diminués.

Si la taille du réacteur est trop importante, dans le cas de très grandes capacités, plusieurs réacteurs de ce type peuvent être présents, préférentiellement en parallèle. Chaque réacteur est alors généralement alimenté par un compresseur d'air dédié et un brûleur dédié.

### Description détaillée de l'invention

Dans tout le texte, 1 bar équivaut à 0,1 MPa.

L'invention concerne un réacteur permettant la mise en oeuvre d'une réaction endothermique en phase gazeuse présentant une forme cylindrique le long d'un axe vertical selon la revendication 1.

Dans le cadre de l'invention, on nomme premier secteur, le secteur dans lequel a lieu l'alimentation du réacteur en mélange réactionnel. Les autres secteurs sont nommés deuxième secteur, troisième secteur jusqu'au dernier secteur en respectant l'ordre de circulation du mélange réactionnel dans le réacteur. Par exemple dans le cas de 4 secteurs, le premier secteur est celui dans lequel a lieu l'alimentation du réacteur en mélange réactionnel. Le mélange réactionnel circule alors successivement dans ce premier secteur puis dans le second secteur puis dans le troisième secteur puis dans le dernier secteur avant d'être évacué hors du réacteur.

Selon un mode de réalisation préféré, la zone catalytique puis la zone d'échange, se succèdent du bord vers le centre du réacteur.

Selon un mode de réalisation préféré, les panneaux hermétiques (65) verticaux divisant le réacteur en secteurs sont fixés le long d'une zone cylindrique centrale (205). Les secteurs comportent chacun une section d'échange (61), une section catalytique (62), une section d'alimentation (161) et une section de collecte (162), l'ensemble desdites sections d'échange formant la zone d'échange (204), l'ensemble desdites sections catalytiques formant la zone catalytique (202), l'ensemble desdites sections d'alimentation formant la zone d'alimentation (201) et l'ensemble desdits secteurs de collecte formant la zone de collecte (203). Le réacteur comprend un fond supérieur et un fond inférieur. Au moins une tubulure (163) par section traverse généralement le fond supérieur du réacteur pour alimenter les sections catalytiques en catalyseur et au moins une tubulure (263) par section traverse le fond inférieur du réacteur pour évacuer le catalyseur des sections catalytiques. Un conduit d'alimentation (17) traversant le fond supérieur du réacteur permet d'alimenter un secteur, nommé le premier secteur, en mélange réactionnel, un conduit d'évacuation (18) traversant le fond supérieur du réacteur permet d'évacuer le dernier secteur du réacteur en mélange réactionnel. Un conduit (67) qui relie la zone de collecte du dernier secteur au conduit (18) afin d'évacuer le mélange réactionnel est présent. Un conduit d'entrée (6) traversant le fond inférieur du réacteur est relié à des conduits (70) amenant à des chambres tubulaires (71). Lesdites chambres tubulaires distribuent du gaz de combustion au moyen de plaques tubulaires (69) par le bas du réacteur dans chaque section d'échange. Des chambres tubulaires (72) permettent de collecter le gaz de combustion en haut de chaque section d'échange, puis des conduits (73) munis de soufflets de dilatation (74) permettent d'évacuer le gaz de combustion vers le conduit de sortie (7) qui traverse le fond supérieur du réacteur.

Chaque section d'échange est généralement constituée d'échangeurs tubulaires ou d'échangeurs à plaques. Chaque section d'échange présente soit une surface identique soit la surface d'échange augmente du premier à la dernière section d'échange.

Chaque section catalytique est généralement formée par deux grilles métalliques concentriques, de préférence de type "grilles Johnson". Toutes les sections catalytiques présentent généralement la même dimension où la dimension des sections catalytiques augmente du premier au dernier secteur.

Les panneaux hermétiques (65) verticaux divisent généralement le réacteur en 3, 4, 6 ou 8 secteurs, de préférence en 4 ou 6 secteurs.

L'invention concerne aussi le procédé de mise en oeuvre d'une réaction de reformage catalytique ou de déshydrogénation d'hydrocarbures dans un réacteur selon l'invention.

L'invention concerne aussi le procédé de mise en oeuvre d'une réaction endothermique en phase gazeuse de reformage catalytique ou de déshydrogénation d'hydrocarbures sur catalyseur solide dans le réacteur selon l'invention dans lequel le mélange réactionnel entre dans le réacteur via le conduit (17) puis circule dans la zone d'alimentation de la première section, traverse radialement la section catalytique (62) en passant de la zone d'alimentation (201) à la zone de collecte (203) du réacteur. Le mélange réactionnelle circule alors dans la section de collecte du premier secteur avant de circuler de haut en bas dans les deux sections d'échange liées correspondant aux deux premiers secteurs, passe sous la seconde section catalytique (62) entre les tubulures (263) de descente du catalyseur, traverse ensuite radialement la deuxième section catalytique (62) en passant de la première zone (201) à la troisième zone (203) du réacteur, passe à la section d'échange du troisième secteur par la conduite (64). Enfin, le mélange réactionnel circule successivement et en alternance dans les sections d'échanges suivantes et les sections catalytiques suivantes.

Le catalyseur circule généralement de haut en bas à la même vitesse dans toutes les sections catalytiques. Le catalyseur peut circuler de haut en bas à une vitesse de plus en plus élevée de la première à la dernière section catalytique.

L'invention concerne aussi le procédé dans lequel le gaz de combustion sous pression assure le chauffage du mélange réactionnel par un échange indirect de chaleur.

Selon une première variante de production du gaz de combustion, le gaz de combustion alimentant le réacteur (60) via le conduit (6) vient du chauffage d'air sous pression atmosphérique circulant via la ligne (1) vers un compresseur d'air (2) puis via la ligne (3) vers une chambre de combustion (4) dans laquelle le brûlage d'un gaz combustible circulant via 5 permet de porter le gaz de combustion à une température comprise entre 600°C et 800°C et préférentiellement entre 650°C et 750°C.

Selon une seconde variante de production du gaz de combustion, le gaz de combustion alimentant le réacteur (60) via le conduit (6) vient du chauffage d'air sous pression atmosphérique circulant via la ligne (1) vers un compresseur d'air (2) puis via la ligne (3) vers une chambre de combustion (4) dans laquelle le brûlage d'un gaz combustible circulant via la ligne (5) permet de chauffer l'air de combustion qui passe alors par une turbine d'expansion (12) qui est sur le même arbre que le compresseur d'air et qui fournit la puissance nécessaire à la compression, le gaz de combustion sortant de la turbine d'expansion (12) est à une pression comprise entre 0,2 et 0,45 MPa, et à une température comprise entre 600 et 800°C, et préférentiellement entre 650 et 750°C.

Selon chacune des deux variantes de production du gaz de combustion, le gaz de combustion sortant du réacteur via le conduit 7 peut être réchauffé dans une chambre de combustion (8) avant d'être envoyé dans une turbine de détente (10) pour produire de l'électricité.

### Description des figures:

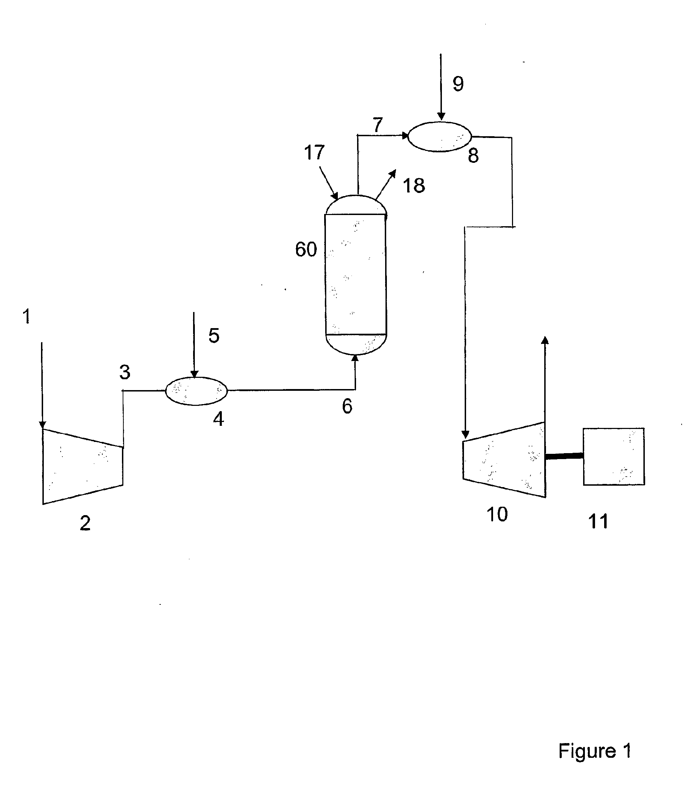

**La** **figure 1** décrit une des manières de fournir de la chaleur au réacteur. De l'air atmosphérique est amené via la ligne (1) au compresseur d'air (2). L'air est comprimé à une pression voisine de 4 bars absolus (0,4 MPa) et est ensuite envoyé via la ligne (3) dans une chambre de combustion (4). Un gaz combustible est amené via la ligne (5) afin d'être brûlé dans la chambre de combustion (4). L'air appauvri et chauffé par la combustion à une température voisine de 700°C est envoyé via la ligne (6) dans le réacteur (60).

Le mélange réactionnel entre via la ligne (17) et sort via la ligne (18). Le gaz de combustion se refroidit par échange avec le mélange réactionnel subissant une réaction endothermique de reformage catalytique.

A la sortie du réacteur, le gaz refroidi est envoyé via la ligne (7) vers une deuxième chambre de combustion (8), où il est réchauffé par combustion du gaz combustible amené via la ligne (9). A la sortie de la chambre de combustion, le gaz chaud est envoyé à une température voisine de 750°C dans une turbine de détente (10) qui entraîne un alternateur (11) pour produire de l'électricité.

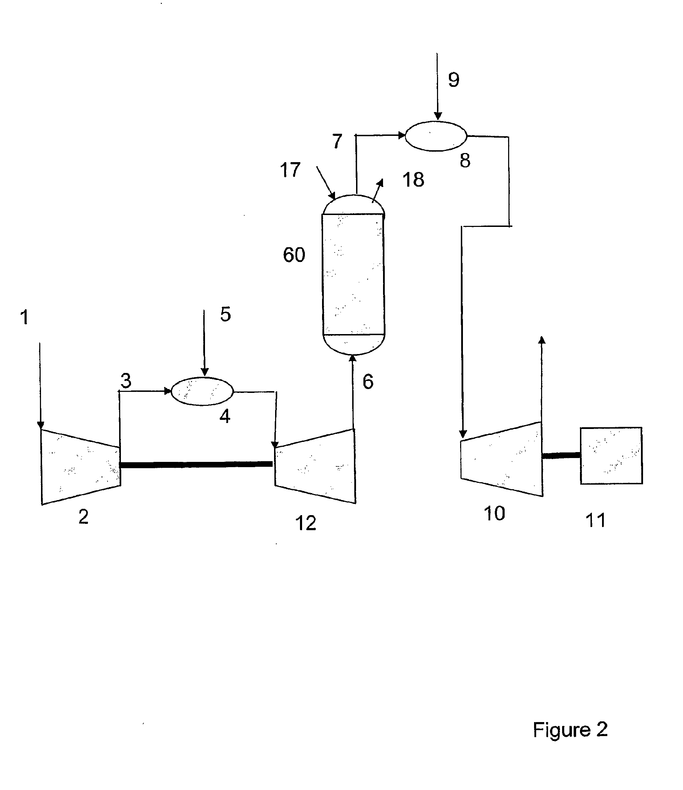

**La** **figure 2** décrit une manière alternative de fournir la chaleur au réacteur (60). De l'air atmosphérique est amené via la ligne (1) au compresseur d'air (2). L'air comprimé à une pression voisine de 20 bars est ensuite envoyé via la ligne (3) dans la chambre de combustion (4). Un gaz combustible est amené via la ligne (5) pour être brûlé dans la chambre de combustion (4). L'air appauvri et chauffé par la combustion à une température voisine de 1300°C est envoyé dans une turbine de détente (12) qui entraîne le compresseur d'air (2). Le gaz à la sortie de la turbine est aux alentours de 3 bars et à une température voisine de 700°C. Il est envoyé via la ligne (6) dans le réacteur (60).

Le mélange réactionnel entre via la ligne (17) et sort via la ligne (18). Le gaz de combustion se refroidit par échange avec le mélange réactionnel subissant une réaction endothermique de reformage catalytique.

A la sortie du réacteur, le gaz refroidi est envoyé via la ligne (7) vers une deuxième chambre de combustion (8), où il est réchauffé par combustion du gaz combustible amené via la ligne (9). A la sortie de la chambre de combustion, le gaz chaud est envoyé à une température voisine de 750°C dans une turbine de détente (10) qui entraîne un alternateur (11) pour produire de l'électricité.

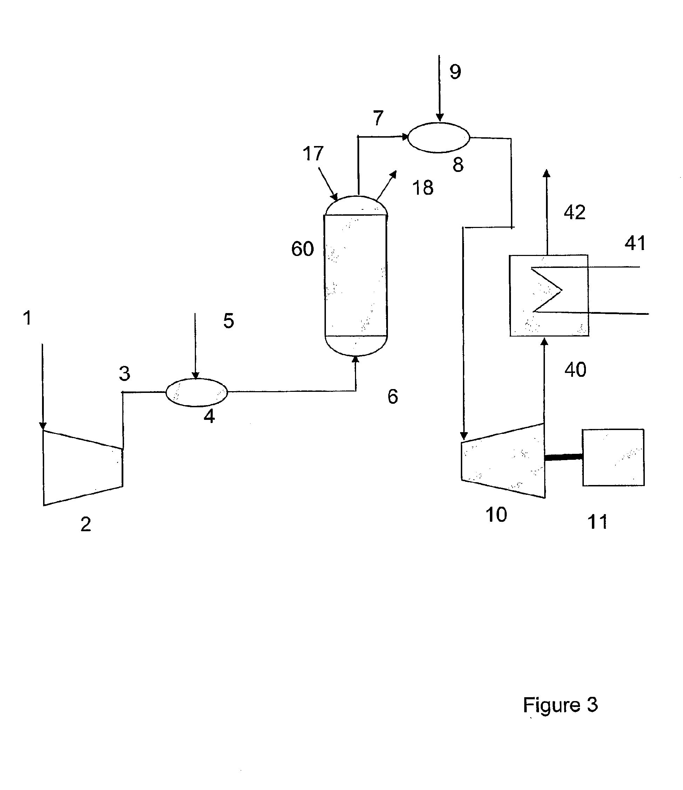

**La** **figure 3** décrit une variante de la figure 1 dans laquelle on récupère de la chaleur sur les gaz chauds circulant via la ligne (40) en sortie de la turbine (10). L'échangeur (41) permet de récupérer la chaleur soit:
- par production de vapeur, qui peut être utilisée dans la raffinerie ou pour produire de l'électricité,
- soit par chauffage d'un fluide caloporteur (huile chaude), qui peut être utilisé par exemple pour permettre de rebouillir les colonnes du procédé.

Le gaz effluent de l'échangeur (41) circule via la ligne (42).

Cette variante est bien entendu possible aussi de la même façon dans le cas de la figure 2 (non représenté).

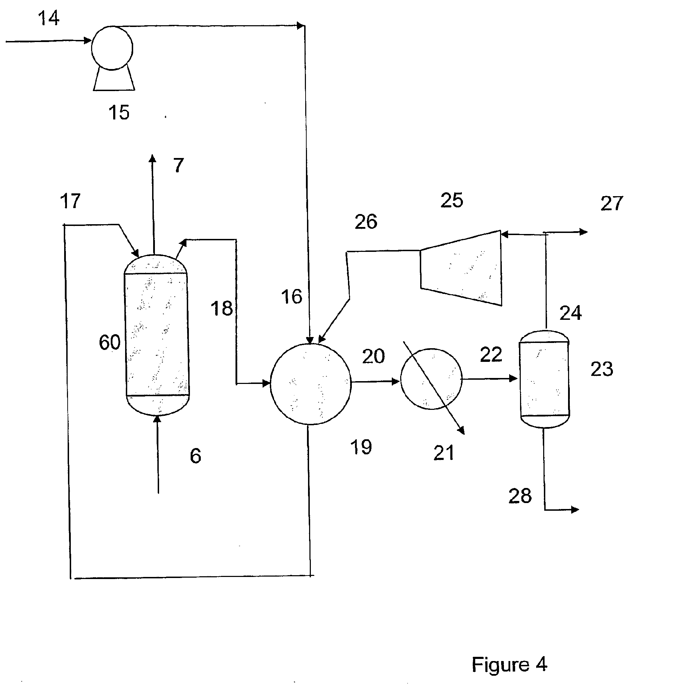

**La** **figure 4** représente la section réactionnelle d'un reformage catalytique suivant l'invention.

Le gaz de combustion entre via la ligne (6) et sort via la ligne (7) du réacteur (60).

La charge arrive via la ligne (14) à la pompe de charge (15). La charge au refoulement de la pompe est envoyée via la ligne (16) à l'échangeur de chaleur (19), qui est de préférence du type Packinox.

Le gaz de recyclage qui circule via la ligne (26) est envoyé également à cet échangeur (19), pour être mélangé à la charge circulant via la ligne (16) dans l'échangeur et chauffé à une température voisine de 440°C par échange avec le mélange réactionnelle sortant du réacteur (60) via la ligne (18). A la sortie de l'échangeur de chaleur (19), le mélange réactionnel est envoyé dans le réacteur (60) via la ligne (17). Le mélange réactionnel sortant du réacteur via la ligne (18) est aux alentours de 490°C et est envoyée vers le haut de l'échangeur de chaleur (19), où il est refroidi aux alentours de 100°C. A la sortie de l'échangeur de chaleur (19), l'effluent est envoyé via la ligne (20) vers un échangeur de chaleur (21), où il est refroidi par échange de chaleur avec de l'air ou de l'eau de refroidissement. A la sortie de l'échangeur (21), l'effluent refroidi et partiellement condensé est envoyé via la ligne (22) vers le ballon séparateur (23). Le liquide du ballon est soutiré via la ligne (28) vers une section de stabilisation. La phase gazeuse du ballon séparateur (24), constituée principalement d'hydrogène, est utilisée en partie pour constituer un recyclage gazeux, comprimé par le compresseur (25) puis circulant via la ligne (26), le reste étant envoyé vers une section de purification via la ligne (27).

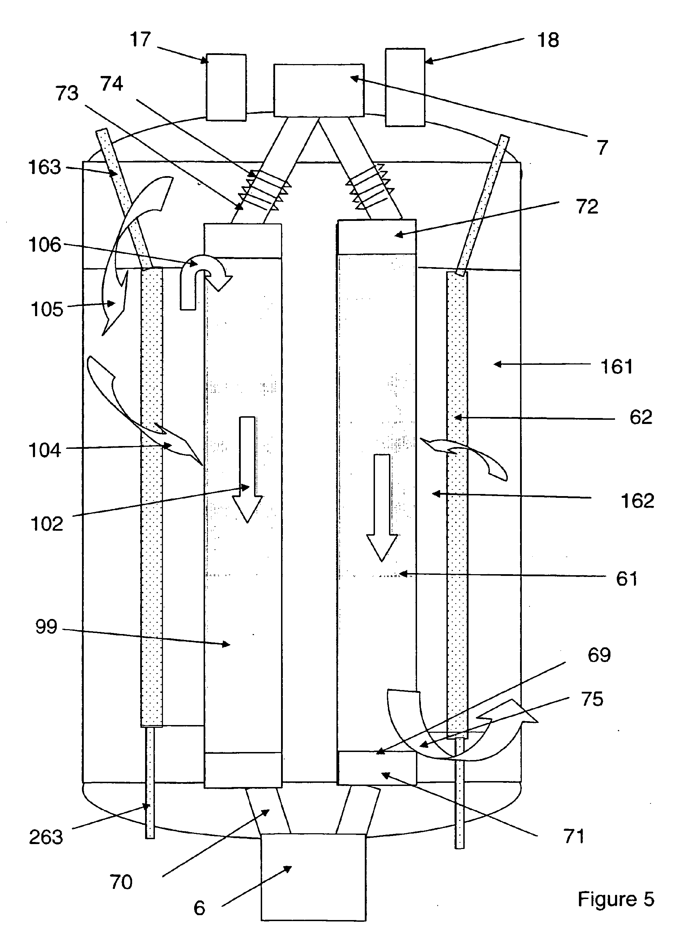

**La** **figure 5** représente schématiquement le réacteur (60) en coupe et vu de face.

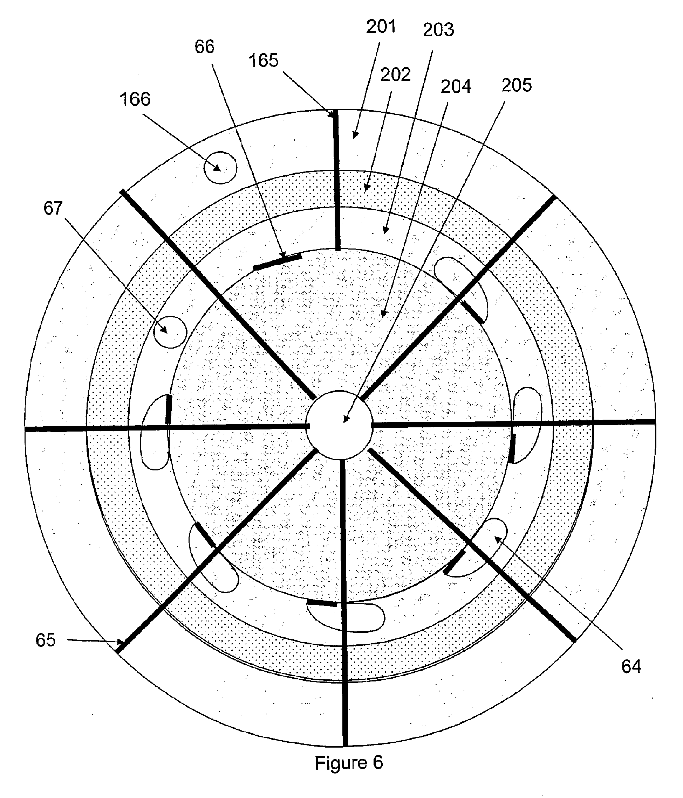

Quatre zones annulaires centrées sur l'axe verticale se succèdent du bord vers le centre du réacteur, une première zone (visible sur la figure 6 numéro 201) dite zone d'alimentation, une deuxième zone (visible sur la figure 6 numéro 202) dite zone catalytique, une troisième zone (visible sur la figure 6 numéro 203) dite zone de collecte et une quatrième zone (visible sur la figure 6 numéro 204) dite zone d'échange.

Des panneaux hermétiques verticaux (visibles sur la figure 6 numéro (65)) sont fixés sur la zone cylindrique centrale (visible sur la figure 6 numéro 205) et divisent le réacteur, de préférence en 3, 4, 6 ou 8 secteurs.

Chaque secteur comporte une section d'échange (61) et une section catalytique (62). L'ensemble des sections d'échange forme la zone d'échange (204) et l'ensemble des sections catalytiques forme la zone catalytique (202). Chaque secteur comporte une section d'alimentation (161) et une section de collecte (162). L'ensemble des sections d'alimentation forme la zone d'alimentation (201) et l'ensemble des sections de collecte forme la zone de collecte (203).

Le gaz de combustion circule de bas en haut dans le réacteur. Le gaz de combustion est alimenté par le bas du réacteur via le conduit d'entrée (6) puis est réparti dans chaque section d'échange via les conduits (70) puis via les chambres tubulaires (71) avant d'être distribué par des plaques tubulaires (69) dans des tubes (99). En sortie des tubes, le gaz de combustion est collecté, en haut du réacteur, dans des chambres tubulaires (72), puis envoyé via les conduits (73) munis de soufflets de dilatation (74) vers le conduit de sortie (7).

Le mélange réactionnel parcourt successivement tous les secteurs. Le mélange réactionnel entre par le conduit (17) et à la sortie de la section de collecte du dernier secteur, il est collecté par le conduit (visible sur la figure 6 numéro 67) puis sort du réacteur via le conduit (18).

La circulation du mélange réactionnel, comprenant de l'hydrogène et des hydrocarbures, est représentée par les flèches.

La pression d'entrée du réacteur est voisine de 4 bars.

Le mélange réactionnel est alimenté directement dans la section catalytique du premier secteur (voir flèche 105), puis est envoyé par l'entrée (66) (voir flèche 106) dans les deux sections d'échange liées correspondant à deux secteurs. Le mélange réactionnel se réchauffe en descendant (flèche 102) à contre-courant du gaz de combustion avant d'être envoyé dans la section catalytique du deuxième secteur. Le mélange réactionnel est alors évacué du deuxième secteur en haut du réacteur et envoyé dans le troisième secteur via une conduite (visible sur la figure 6, numéro (64)). Le mélange réactionnel est à nouveau réchauffé dans la section d'échange du troisième secteur, puis refroidi en réagissant dans la section catalytique du troisième secteur.

Au fur et à mesure de l'avancement des réactions, il reste de moins en moins de naphtènes, les paraffines sont plus lentes à réagir, et le craquage exothermique compense en partie l'endothermicité des autres réactions. Le profil de température de sortie donc d'entrée du mélange réactionnel dans les secteurs successifs est donc ascendant, ce qui est considéré comme favorable pour les rendements.

A la sortie du dernier secteur, le mélange réactionnel est collecté par le conduit (visible sur la figure 6 numéro 67) puis envoyé vers le conduit de sortie (18).

Au moins une tubulure (163) par secteur traverse le fond supérieur du réacteur pour alimenter les sections catalytiques en catalyseur et au moins une tubulure (263) par secteur traverse le fond inférieur du réacteur pour évacuer le catalyseur des sections catalytiques en catalyseur.

**La** **figure 6** montre le réacteur vu du dessus et en coupe.

Quatre zones annulaires centrées sur l'axe verticale se succèdent du bord vers le centre du réacteur: la zone d'alimentation (201), la zone catalytique (202), la zone de collecte (203) et la zone d'échange (204).

Des panneaux hermétiques verticaux (65) sont fixés sur la zone cylindrique centrale (205) et un demi-panneau hermétique (165) divisent le réacteur en 8 secteurs.

Les conduits (64) permettent le passage d'un secteur à l'autre. Le mélange réactionnel entre dans la première section catalytique par le conduit (166), dans les deux sections d'échange liées par l'entrée (66). A la sortie du dernier secteur, le mélange réactionnel est collecté par le conduit (67).

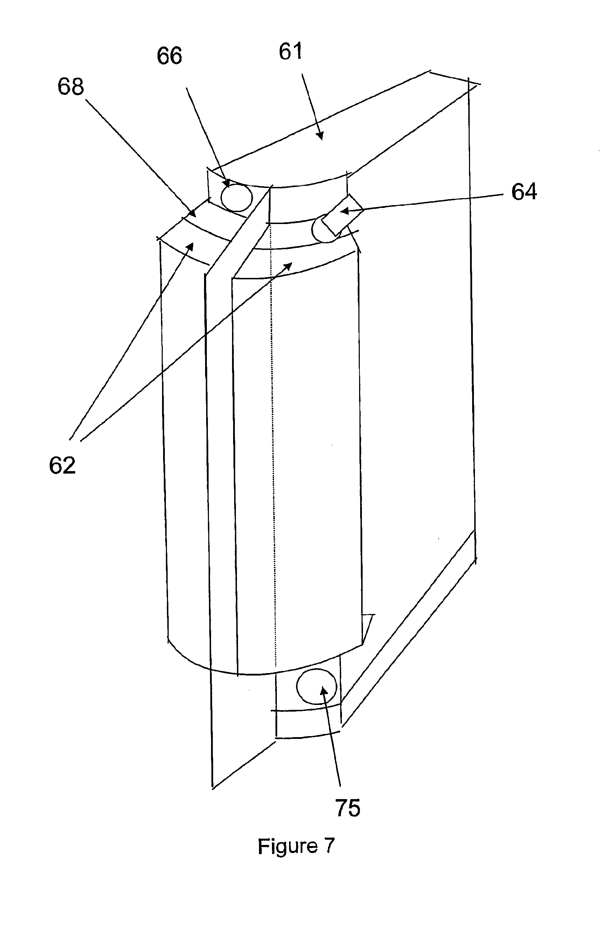

**La** **Figure 7** représente les deux premiers secteurs vus de la virole avec les deux sections d'échange liées (61) en arrière plan, deux sections catalytiques (62) au premier plan, la sortie (75) des deux sections d'échange liées, le passage (64) du deuxième au troisième secteur, une plaque de fermeture (68) et l'entrée des deux sections d'échange liées (66).

### -Exemple (avec 6 secteurs au lieu des 8 secteurs représentés sur la figure 6)

On considère une unité de reformage catalytique traitant 100 tonnes par heure de charge, avec 50 tonnes de catalyseur.

La charge est une coupe 80-180°C, avec une teneur en paraffines de 70% volume, en naphtènes de 20% volume et en aromatiques de 10% volume.

Le rapport molaire d'hydrogène pur par rapport à la charge est de 2.

L'octane visé est de 100.

La totalité du catalyseur est régénérée en continu en 3 jours.

Pour fournir la chaleur de réaction, environ 104,5 millions de kJ/h (environ 25 millions de kcal/h), on comprime 460 tonnes d'air à 4 bars absolu. Le compresseur centrifuge d'air a une efficacité polytropique de 80% et consomme 23,2 MW. La température de sortie du compresseur est de 192°C. On brûle dans la première chambre de combustion 5560 kg/h de gaz naturel à 15°C, avec un pouvoir calorifique inférieur de 46439,8 kJ/kg (11110 kcal/kg). La température en sortie de chambre de combustion est de 680°C. Le gaz de combustion arrive via la conduite (6) à environ 680°C.

Les températures d'entrée et de sortie côté reformage catalytique dans les différents secteurs sont comme suit (on suppose 6 secteurs dans cet exemple):

### mélange réactionnel

section catalytique 1: entrée directe dans le catalyseur à 440°C, sortie à 367°C
section catalytique 2: entrée dans le catalyseur à 490°C, sortie à 428°C
section catalytique 3: entrée 479°C, sortie 442°C
section catalytique 4: entrée 490°C, sortie 456°C
section catalytique 5: entrée 501 °C, sortie 470°C
section catalytique 6: entrée 512°C, sortie 485°C (à 4,3 bars absolu)

### gaz de combustion

1^{er} et 2eme sections d'échange: entrée 680°C, sortie 410°C
3eme section d'échange: entrée 680°C, sortie 452°C
4eme section d'échange: entrée 680°C, sortie 464°C
5eme section d'échange: entrée 680°C, sortie 477°C
6eme section d'échange: entrée 680°C, sortie 490°C

Le gaz de combustion sort du réacteur à 450°C, après avoir cédé 122,892 millions de KJ/h (29,4 MM Kcal/h) au mélange réactionnel.

Le gaz de combustion effluent est envoyé dans une deuxième chambre de combustion où 3800 kg/h de gaz combustibles sont brûlés, pour atteindre 760°C à une pression de 3,4 bars absolus en entrée d'une turbine d'expansion. Cette turbine a une efficacité polytropique de 85% et fournit environ 36,2 MW de puissance électrique qui permet d'entraîner le compresseur d'air et permet de fournir suffisamment d'électricité pour les unités de reformage catalytique et de prétraitement.

En sortie de turbine, l'effluent gazeux est à une température de 526°C, ce qui permet soit de produire davantage d'électricité en générant de la vapeur, soit de réchauffer un fluide caloporteur qui permet de rebouillir les colonnes du procédé (la colonne de strippage du prétraitement et la stabilisation du reformage).

Dans cet exemple, on a 66,88 millions de kJ/h (16 MM kcal/h) disponible entre 526°C et 400°C, ce qui est plus que suffisant pour les deux colonnes.

La LMDT moyenne calculée dans le réacteur est de 88°C, une surface d'échange de 7000 m² environ est nécessaire, soit 6 fois 1170 m². Ceci correspond à 6 fois 827 tubes de 30 mm de diamètre et de 15 m de long.

L'exemple est donné avec des échangeurs tubulaires pour simplifier les calculs, mais il est possible, sans sortir du cadre de l'invention, d'utiliser d'autres types d'échangeur, par exemple des échangeurs à plaques soudées type Packinox.

Les tubes sont installés en pas triangulaire de pas P= 38 mm. Avec ce pas, il faut une section de 0,00125 m2 (0.866 x P² ) pour loger un tube, donc environ 6,2 m2 pour loger les 4960 tubes.

En laissant un accès de 0,8 m de diamètre au centre et en majorant la surface de 15 % pour tenir compte du sectionnement, il faut donc une surface de 0,5 + 6,2 x 1,15 = 7,63 m2 pour la totalité de la zone d'échange, soit un diamètre de 3,1 m.

Le catalyseur est installé dans une zone annulaire de diamètre intérieur 3,9 m et sur une hauteur voisine de 14,5 m. En supposant une PPH de 2, on a 50 tonnes de catalyseur, soit environ 71 m3, donc 4,9 m2 de zone catalytique (71/14,5). Le diamètre extérieur de la zone catalytique annulaire est donc de 4,6 m.

Chaque secteur comporte donc à partir de la virole extérieure:
- une section vide (environ 60 cm)
- une section remplie de catalyseur entre deux grilles Johnson ou équivalent (environ 70 cm)
- une section libre (environ 40 cm)
- une section d'échange (environ 115 cm) remplie de tubes verticaux de 30 mm de diamètre
- une section libre centrale (environ 40 cm de rayon)

Pour installer les tubes d'échange et le catalyseur comme expliqué plus haut, il faut donc une virole de 6,5 m de diamètre intérieur et d'environ 17 m de hauteur.

Le coke produit est très faible dans le premier secteur, et de plus en plus important de secteur en secteur, pour être le plus élevé dans le dernier (8 % de coke si le catalyseur circule en trois jours dans ce secteur). Une solution est de faire circuler le catalyseur partout à la même vitesse, de mélanger le catalyseur en sortie de réacteur pour l'envoyer au régénérateur et de le régénérer en mélange, la teneur moyenne en coke n'est alors que de 4 % environ, et permet une régénération sans risque.

Cependant le catalyseur des premiers secteurs est régénéré avant que cela ne soit nécessaire, et il est sans doute préférable de dimensionner les dispositifs de descente du catalyseur de manière à ce que le catalyseur des premiers secteurs descende plus lentement, et le catalyseur des derniers descende plus vite.

## Revendications

1. Réacteur permettant la mise en oeuvre d'une réaction endothermique en phase gazeuse présentant une forme cylindrique le long d'un axe vertical, un fond supérieur, un fond inférieur et comprenant:
- au moins quatre zones annulaires centrées sur l'axe verticale se succédant du bord vers le centre du réacteur, une première zone (201) dite zone d'alimentation, une deuxième zone (202) dite zone catalytique, une troisième zone (203) dite zone de collecte et une quatrième zone (204) dite zone d'échange de chaleur
- des panneaux hermétiques (65) verticaux situés le long des rayons du réacteur cylindrique qui divisent le réacteur en secteurs, lesdits secteurs comportent chacun une section d'échange (61), une section catalytique (62), une section d'alimentation (161) et une section de collecte (162), l'ensemble desdites sections d'échange formant la zone d'échange de chaleur (204), l'ensemble desdites sections catalytiques formant la zone catalytique (202), l'ensemble desdites sections d'alimentation formant la zone d'alimentation (201) et l'ensemble desdites sections de collecte formant la zone de collecte (203),et dans lequel les deux premières sections d'échange sont liées,
- un conduit d'alimentation (17) traversant le fond supérieur du réacteur permet d'alimenter un secteur, nommé premier secteur, en mélange réactionnel,
- un conduit d'évacuation (18) traversant le fond supérieur du réacteur permet d'évacuer le mélange réactionnel du dernier secteur du réacteur,
- un conduit (166) permet d'alimenter en mélange réactionnel la section catalytique dudit premier secteur,
- une entrée (66) située dans les deux sections d'échange liées du premier secteur et permettant le passage du mélange réactionnel provenant de la section catalytique dudit premier secteur aux deux sections d'échange liées,
- un conduit (64) relie la section de collecte de chaque secteur, à l'exception du premier et du dernier secteur, à la section d'échange du secteur suivant
- un conduit (67) relie la zone de collecte du dernier secteur au conduit (18) permettant d'évacuer le mélange réactionnel,
- au moins une tubulure (163) par secteur traverse le fond supérieur du réacteur pour alimenter les sections catalytiques en catalyseur et au moins une tubulure (263) par secteur traverse le fond inférieur du réacteur pour évacuer le catalyseur des sections catalytiques.
- un conduit d'entrée (6) traversant le fond inférieur du réacteur est relié à des conduits (70) amenant à des chambres tubulaires (71), lesdites chambres tubulaires distribuant du gaz de combustion au moyen de plaques tubulaires (69) par le bas du réacteur et dans chaque section d'échange
- des chambres tubulaires (72) permettent de collecter le gaz de combustion en haut de chaque section d'échange, puis des conduits (73) munis de soufflets de dilatation (74) permettent d'évacuer le gaz de combustion vers le conduit de sortie (7) qui traverse le fond supérieur du réacteur.

2. Réacteur selon la revendication 1 dans lequel chaque section catalytique est formée par deux grilles métalliques concentriques.

3. Réacteur selon l'une des revendications 1 à 2 dans lequel chaque section d'échange est constituée d'échangeurs tubulaires.

4. Réacteur selon l'une des revendications 1 à 2 dans lequel chaque section d'échange est constituée d'échangeurs à plaques.

5. Réacteur selon l'une des revendications 1 à 4 dans lequel chaque section d'échange présente une surface identique.

6. Réacteur selon l'une des revendications 1 à 4 dans lequel la surface d'échange augmente de la première à la dernière section d'échange.

7. Réacteur selon l'une des revendications 1 à 6 dans lequel toutes les sections catalytiques présentent la même dimension.

8. Réacteur selon l'une des revendications 1 à 6 dans lequel la dimension des sections catalytiques augmente de la première à la dernière section catalytique.

9. Réacteur selon l'une des revendications 1 à 8 dans lequel les panneaux hermétiques (65) verticaux divisent le réacteur en 3, 4, 6 ou 8 secteurs.

10. Procédé de mise en oeuvre d'une réaction de reformage catalytique ou de déshydrogénation d'hydrocarbures dans un réacteur selon l'une des revendications 1 à 9.

11. Procédé selon la revendication 10 dans lequel le mélange réactionnel entre dans le réacteur via le conduit (17) puis circule dans la section d'alimentation du premier secteur, traverse radialement la section catalytique (62) en passant de la zone d'alimentation (201) à la zone de collecte (203) du réacteur, circule dans la section de collecte du premier secteur avant de circuler de haut en bas dans les deux sections d'échange liées correspondant aux deux premiers secteurs, passe sous la seconde section catalytique (62) entre les tubulures (263) de descente du catalyseur, traverse ensuite radialement la deuxième section catalytique (62) en passant de la première zone (201) à la troisième zone (203) du réacteur, passe à la section d'échange du troisième secteur par la conduite (64) puis circule successivement et en alternance dans les sections d'échanges suivantes et les sections catalytiques suivantes.

12. Procédé selon l'une des revendications 10 à 11 dans lequel le catalyseur circule de haut en bas à la même vitesse dans toutes les sections catalytiques.

13. Procédé selon l'une des revendications 10 à 11 dans lequel le catalyseur circule de haut en bas à une vitesse de plus en plus élevée de la première à la dernière section catalytique.

14. Procédé selon l'une des revendications 10 à 13 dans lequel le gaz de combustion sous pression assure le chauffage du mélange réactionnel par un échange indirect de chaleur.

15. Procédé selon la revendication 14 dans lequel le gaz de combustion alimentant le réacteur (60) via le conduit (6) vient du chauffage d'air sous pression atmosphérique circulant via une ligne (1) vers un compresseur d'air (2) puis via une ligne (3) vers une chambre de combustion (4) dans laquelle le brûlage d'un gaz combustible circulant via une ligne (5) permet de porter le gaz de combustion à une température comprise entre 600°C et 800°C.

16. Procédé selon la revendication 14 dans lequel le gaz de combustion alimentant le réacteur (60) via le conduit (6) vient du chauffage d'air sous pression atmosphérique circulant via une ligne (1) vers un compresseur d'air (2) puis via une ligne (3) vers une chambre de combustion (4) dans laquelle le brûlage d'un gaz combustible circulant via une ligne (5) permet de chauffer l'air de combustion qui passe alors par une turbine d'expansion (12) qui est sur le même arbre que le compresseur d'air et qui fournit la puissance nécessaire à la compression, le gaz de combustion sortant de la turbine d'expansion (12) est à une pression comprise entre 0,2 et 0,45 MPa, et à une température comprise entre 600 et 800°C.

17. Procédé suivant l'une des revendications 15 à 16 dans lequel le gaz de combustion sortant du réacteur via le conduit 7 est réchauffé dans une chambre de combustion (8) avant d'être envoyé dans une turbine de détente (10) pour produire de l'électricité.

## Patentansprüche

1. Reaktor zur Durchführung einer endothermen Gasphasenreaktion, der eine zylindrische Form entlang einer vertikalen Achse, einen oberen Boden und einen unteren Boden aufweist und Folgendes umfasst:
- mindestens vier auf der vertikalen Achse zentrierte ringförmige Zonen, die vom Rand zur Mitte des Reaktors aufeinander folgen, eine erste Zone (201), genannt Versorgungszone, eine zweite Zone (202), genannt katalytische Zone, eine dritte Zone (203), genannt Sammelzone und eine vierte Zone (204), genannt Wärmeaustauschzone,
- vertikale hermetische Paneele (65), die entlang der Radien des zylindrischen Reaktors angeordnet sind, die den Reaktor in Sektoren aufteilen, wobei die Sektoren jeweils einen Austauschabschnitt (61), einen katalytischen Abschnitt (62), einen Versorgungsabschnitt (161) und einen Sammelabschnitt (162) umfassen, wobei die Gesamtheit der Austauschabschnitte die Wärmeaustauschzone (204) bildet, die Gesamtheit der katalytischen Abschnitte die katalytische Zone (202) bildet, die Gesamtheit der Versorgungsabschnitte die Versorgungszone (201) bildet und die Gesamtheit der Sammelabschnitte die Sammelzone (203) bildet, und wobei die beiden ersten Austauschabschnitte verbunden sind,
- eine Versorgungsleitung (17), die den oberen Boden des Reaktors durchdringt, um einen Sektor, genannt erster Sektor, mit Reaktionsgemisch zu versorgen,
- eine Abführleitung (18), die den oberen Boden des Reaktors durchdringt, um das Reaktionsgemisch aus dem letzten Sektor des Reaktors abzuführen,
- eine Leitung (166), um den katalytischen Abschnitt des ersten Sektors mit Reaktionsgemisch zu versorgen,
- einen Einlass (66), der in den beiden verbundenen Austauschabschnitten des ersten Sektors angeordnet ist und die Überführung des Reaktionsgemischs, das aus dem katalytischen Abschnitt des ersten Sektors stammt, in die beiden verbundenen Abschnitte ermöglicht,
- eine Leitung (64), die den Sammelabschnitt jedes Sektors, mit Ausnahme des ersten und des letzten Sektors, mit dem Austauschabschnitt des folgenden Sektors verbindet,
- eine Leitung (67), die den Sammelabschnitt des letzten Sektors mit der Leitung (18) verbindet, um das Reaktionsgemisch abzuführen,
- mindestens ein Rohr (163) pro Sektor, das den unteren Boden des Reaktors durchdringt, um die katalytischen Abschnitte mit Katalysator zu versorgen und mindestens ein Rohr (263) pro Sektor, das den unteren Boden des Reaktors durchdringt, um den Katalysator aus den katalytischen Abschnitten abzuführen,
- eine Einlassleitung (6), die den unteren Boden des Reaktors durchdringt und mit Leitungen (70) verbunden ist, die zu röhrenförmigen Kammern (71) führen, wobei die röhrenförmigen Kammern mithilfe von röhrenförmigen Platten (69) Verbrennungsgas vom unteren Teil des Reaktors nach oben und in jeden Austauschabschnitt verteilen,
- röhrenförmige Kammern (72), um das Verbrennungsgas im oberen Teil jedes Austauschabschnitts zu sammeln, dann Leitungen (73), die mit Dehnungsbälgen (74) versehen sind, um das Verbrennungsgas zur Auslassleitung (7), die den oberen Boden des Reaktors durchdringt, abzuführen.

2. Reaktor nach Anspruch 1, wobei jeder katalytische Abschnitt aus zwei konzentrischen metallischen Gittern gebildet ist.

3. Reaktor nach einem der Ansprüche 1 bis 2, wobei jeder Austauschabschnitt aus röhrenförmigen Austauschern besteht.

4. Reaktor nach einem der Ansprüche 1 bis 2, wobei jeder Austauschabschnitt aus Plattenaustauschern besteht.

5. Reaktor nach einem der Ansprüche 1 bis 4, wobei jeder Austauschabschnitt eine identische Oberfläche aufweist.

6. Reaktor nach einem der Ansprüche 1 bis 4, wobei die Austauschoberfläche vom ersten bis zum letzten Austauschabschnitt zunimmt.

7. Reaktor nach einem der Ansprüche 1 bis 6, wobei alle katalytischen Abschnitte die gleiche Abmessung aufweisen.

8. Reaktor nach einem der Ansprüche 1 bis 6, wobei die Abmessung der katalytischen Abschnitte vom ersten bis zum letzten katalytischen Abschnitt zunimmt.

9. Reaktor nach einem der Ansprüche 1 bis 8, wobei die vertikalen hermetischen Tafeln (65) den Reaktor in 3, 4, 6 oder 8 Sektoren aufteilen.

10. Verfahren zur Durchführung einer Reaktion zur katalytischen Reformierung oder Dehydrogenierung von Kohlenwasserstoffen in einem Reaktor nach einem der Ansprüche 1 bis 9.

11. Verfahren nach Anspruch 10, wobei das Reaktionsgemisch über die Leitung (17) in den Reaktor eintritt, dann in dem Versorgungsabschnitt des ersten Sektors zirkuliert, radial den katalytischen Abschnitt (62) vorbei an der Versorgungszone (201) zur Sammelzone (203) des Reaktors durchquert, in dem Sammelabschnitt des ersten Sektors zirkuliert, bevor es von oben nach unten in den beiden verbundenen Austauschzonen zirkuliert, die den beiden ersten Sektoren entsprechen, unter dem zweiten katalytischen Abschnitt (62) zwischen den Fallrohren (263) des Katalysators durchströmt, anschließend radial den zweiten katalytischen Abschnitt (62) vorbei an der ersten Zone (201) zur dritten Zone (203) des Reaktors durchquert, über die Leitung (64) zum Austauschabschnitt des dritten Sektors strömt, dann nacheinander und abwechselnd in den folgenden Austauschabschnitten und den folgenden katalytischen Abschnitten zirkuliert.

12. Verfahren nach einem der Ansprüche 10 bis 11, wobei der Katalysator in allen katalytischen Abschnitten mit der gleichen Geschwindigkeit von oben nach unten zirkuliert.

13. Verfahren nach einem der Ansprüche 10 bis 11, wobei der Katalysator vom ersten bis zum letzten katalytischen Abschnitt von oben nach unten mit einer immer höheren Geschwindigkeit zirkuliert.

14. Verfahren nach einem der Ansprüche 10 bis 13, wobei das druckbeaufschlagte Verbrennungsgas die Erwärmung des Reaktionsgemischs durch einen indirekten Wärmeaustausch gewährleistet.

15. Verfahren nach Anspruch 14, wobei das Verbrennungsgas, das den Reaktor (60) über die Leitung (6) versorgt, von der Erwärmung der Luft unter Atmosphärendruck kommt, die über eine Linie (1) zu einem Luftverdichter (2), dann über eine Linie (3) zu einer Verbrennungskammer (4) zirkuliert, in der es die Verbrennung eines brennbaren Gases, das über eine Linie (5) zirkuliert, ermöglicht, das Verbrennungsgas auf eine Temperatur im Bereich zwischen 600 °C und 800 °C zu bringen.

16. Verfahren nach Anspruch 14, wobei das Verbrennungsgas, das den Reaktor (60) über die Leitung (6) versorgt, von der Erwärmung der Luft unter Atmosphärendruck kommt, die über eine Linie (1) zu einem Luftverdichter (2) dann über eine Linie (3) zu einer Verbrennungskammer (4) zirkuliert, in der es die Verbrennung eines brennbaren Gases, das über eine Linie (5) zirkuliert, ermöglicht, die Verbrennungsluft zu erwärmen, die dann durch eine Expansionsturbine (12) läuft, die sich auf der gleichen Welle befindet wie der Luftverdichter und die die Kraft bereitstellt, die für die Verdichtung erforderlich ist, wobei das Verbrennungsgas, das aus der Expansionsturbine (12) austritt, einen Druck im Bereich zwischen 0,2 und 0,45 MPa und eine Temperatur im Bereich zwischen 600 und 800 °C aufweist.

17. Verfahren nach einem der Ansprüche 15 bis 16, wobei das Verbrennungsgas, das über die Leitung 7 aus dem Reaktor austritt, in einer Verbrennungskammer (8) erneut erwärmt wird, bevor es in eine Entspannungsturbine (10) geschickt wird, um Elektrizität zu erzeugen.

## Claims

1. A reactor for carrying out an endothermic gas phase reaction, having a cylindrical shape along a vertical axis, an upper head and a lower bottom, and comprising:
• at least four annular zones centred on the vertical axis and, in succession from the edge towards the centre of the reactor, a first zone (201) termed the supply zone, a second zone (202) termed the catalytic zone, a third zone (203) termed the collection zone and a fourth zone (204) termed the heat exchange zone;
• vertical hermetic panels (65) located along the radii of the cylindrical reactor which divide the reactor into sectors, said sectors each comprising an exchange section (61), a catalytic section (62), a supply section (161) and a collection section (162), the ensemble of said exchange sections forming the heat exchange zone (204), the ensemble of said catalytic sections forming the catalytic zone (202), the ensemble of said supply sections forming the supply zone (201) and the ensemble of said collection sections forming the collection zone (203), and in which the two first exchange sections are connected;
• a supply conduit (17) passing through the upper head of the reactor in order to supply a sector, denoted the first sector, with reaction mixture;
• an evacuation conduit (18) passing through the upper head of the reactor in order to evacuate the reaction mixture from the last sector of the reactor;
• a conduit (166) for supplying the catalytic section of said first sector with reaction mixture;
• an inlet (66) located in the two exchange sections connected to the first sector and allowing the passage of reaction mixture deriving from the catalytic section of said first sector to the two connected exchange sections;
• a conduit (64) connecting the collection section of each sector, with the exception of the first and last sector, to the exchange section of the next sector;
• a conduit (67) connecting the collection zone of the last sector to the conduit (18) in order to evacuate the reaction mixture;
• at least one pipe (163) per sector passing through the upper head of the reactor in order to supply the catalytic sections with catalyst and at least one pipe (263) per sector passing through the lower bottom of the reactor in order to evacuate catalyst from the catalytic sections;
• an inlet conduit (6) passing through the lower bottom of the reactor connected to conduits (70) leading to tubular chambers (71), said tubular chambers distributing combustion gas by means of tubular plates (69) via the bottom of the reactor and into each exchange section;
• tubular chambers (72) for collecting combustion gas from the top of each exchange section, then conduits (73) provided with expansion bellows (74) for evacuating the combustion gas to the outlet conduit (7) which passes through the upper head of the reactor.

2. A reactor according to claim 1, in which each catalytic section is formed by two concentric metal screens.

3. A reactor according to claim 1 or claim 2, in which each exchange section is constituted by tubular exchangers.

4. A reactor according to claim 1 or claim 2, in which each exchange section is constituted by plate exchangers.

5. A reactor according to one of claims 1 to 4, in which each exchange section has an identical surface area.

6. A reactor according to one of claims 1 to 4, in which the exchange surface area increases from the first to the last exchange section.

7. A reactor according to one of claims 1 to 6, in which all of the catalytic sections have the same dimensions.

8. A reactor according to one of claims 1 to 6, in which the dimensions of the catalytic sections increase from the first to the last catalytic section.

9. A reactor according to one of claims 1 to 8, in which the vertical hermetic panels (65) divide the reactor into 3, 4, 6 or 8 sectors.

10. A process for carrying out a catalytic reforming reaction or a hydrocarbon dehydrogenation reaction in a reactor according to one of claims 1 to 9.

11. A process according to claim 10, in which the reaction mixture enters the reactor via the conduit (17) then moves into the supply section of the first sector, passes radially through the catalytic section (62), passing from the supply zone (201) to the collection zone (203) of the reactor, moves into the collection section of the first sector before moving from top to bottom in the two connected exchange sections corresponding to the two first sectors, passes under the second catalytic section (62) between the catalyst down pipes (263), then passes radially through the second catalytic section (62), passing from the first zone (201) to the third zone (203) of the reactor, passes to the exchange section of the third sector via the conduit (64), then moves in succession and in an alternating manner in the next exchange sections and the next catalytic sections.

12. A process according to claim 10 or claim 11, in which the catalyst moves from top to bottom at the same rate in all of the catalytic sections.

13. A process according to claim 10 or claim 11, in which the catalyst moves from top to bottom at a rate which increases from the first to the last catalytic section.

14. A process according to one of claims 10 to 13, in which the pressurized combustion gas heats the reaction mixture by indirect heat exchange.

15. A process according to claim 14, in which the combustion gas supplying the reactor (60) via the conduit (6) derives from heating air at atmospheric pressure moving via a line (1) to an air compressor (2) then via a line (3) towards a combustion chamber (4) in which a fuel gas moving via a line (5) can be burned in order to heat the combustion gas to a temperature in the range 600°C to 800°C.

16. A process according to claim 14, in which the combustion gas supplying the reactor (60) via the conduit (6) derives from heating air at atmospheric pressure moving via a line (1) to an air compressor (2) then via a line (3) towards a combustion chamber (4) in which a fuel gas moving via a line (5) can be burned in order to heat the combustion air which then passes via an expansion turbine (12) which is on the same shaft as the air compressor and which provides the power necessary for compression, the combustion gas leaving the expansion turbine (12) being at a pressure in the range 0.2 to 0.45 MPa, and at a temperature in the range 600°C to 800°C.

17. A process according to claim 15 or claim 16, in which the combustion gas leaving the reactor via the conduit (7) is re-heated in a combustion chamber (8) before being sent to a turbo-expander (10) in order to produce electricity.
